# EUROPEAN PATENT APPLICATION

(11) **EP 3 306 584 A1**
(43) Date of publication of application: **11.04.2018**
(21) Application number: 16799635.4
(22) Date of filing: 09.03.2016
(51) Int. Cl.: G08C 15/00, G08C 15/06

(54) **INFORMATION PROCESSING DEVICE, INFORMATION PROCESSING METHOD, INFORMATION PROCESSING PROGRAM, AND INFORMATION PROCESSING SYSTEM**

(30) Priority: 27.05.2015 JP 2015107859
(71) Applicant: NEC Corporation, Tokyo 108-8001 (JP)
(72) Inventor: INOUE Tetsuo, Tokyo 108-8001 (JP); YAMADA Toru, Tokyo 108-8001 (JP)
(74) Representative: Vossius & Partner Patentanwälte Rechtsanwälte mbB
(86) International application number: PCT/JP2016/057436
(87) International publication number: WO 2016/189926

(57) **Abstract**

Congestion in information collection is avoided, thereby avoiding an increase in load. An information processing apparatus includes a predictor that predicts, using a planned transmission/reception count derived based on an information collection request received from an application and a predicted transmission/reception count predicted based on a history of information transmission from devices to the application, a load for transmitting information from the devices to the application, and a controller that controls, based on a prediction result obtained by the predictor, a transmission timing of transmitting information from the devices to the application so that the load is not larger than a predetermined value.

## Description

### CROSS REFERENCE TO RELATED APPLICATIONS

This application is based upon and claims the benefit of priority from Japanese patent application No. 2015-107859 filed on May 27, 2015, the disclosure of which is incorporated herein in its entirety by reference.

### TECHNICAL FIELD

The present invention relates to an information processing apparatus, an information processing method, an information processing program, and an information processing system.

### BACKGROUND ART

In the above technical field, patent literature 1 discloses a technique in which when determining a timing of transmitting information detected by a sensor to a server or an application apparatus, information of a sensor whose detected event largely influences a sensor information distribution is preferentially transmitted. For calculation of the degree of influence, there is disclosed a technique in which a sensor node receives an event model from a server or an application apparatus and controls a transmission timing based on a difference in sensor information detected by a sensor with respect to the event model.

### CITATION LIST

### PATENT LITERATURE

Patent literature 1: Japanese Patent Laid-Open No. 2007-080190

### SUMMARY OF THE INVENTION

### TECHNICAL PROBLEM

In the above literature 1, however, it is impossible to control an information transmission timing based on prediction of the load of the server so as to prevent the congestion of information transmission.

The present invention enables to provide a technique of solving the above-described problem.

### SOLUTION TO PROBLEM

One aspect of the present invention provides an information processing apparatus comprising:
a predictor that predicts, using a planned transmission/reception count derived based on an information collection request received from an application and a predicted transmission/reception count predicted based on a history of information transmission from at least two devices to the application, a load for transmitting information from the at least two devices to the application; and
a controller that controls, based on a prediction result obtained by the predictor, a transmission timing of transmitting information from the at least two devices to the application so that the load is not larger than a predetermined value.

Another aspect of the present invention provides an information processing method comprising:
predicting, using a planned transmission/reception count derived based on an information collection request received from an application and a predicted transmission/reception count predicted based on a history of information transmission from at least two devices to the application, a load for transmitting information from the at least two devices to the application; and
controlling, based on a prediction result obtained in the predicting, a transmission timing of transmitting information from the at least two devices to the application so that the load is not larger than a predetermined value.

Still other aspect of the present invention provides an information processing program for causing a computer to execute a method, comprising:
predicting, using a planned transmission/reception count derived based on an information collection request received from an application and a predicted transmission/reception count predicted based on a history of information transmission from at least two devices to the application, a load for transmitting information from the at least two devices to the application; and
controlling, based on a prediction result obtained in the predicting, a transmission timing of transmitting information from the at least two devices to the application so that the load is not larger than a predetermined value.

Still other aspect of the present invention provides an information processing system comprising:
an information processing apparatus including
a predictor that predicts, using a planned transmission/reception count derived based on an information collection request received from an application and a predicted transmission/reception count predicted based on a history of information transmission from at least two devices to the application, a load for transmitting information from the at least two devices to the application, and
a controller that controls, based on a prediction result obtained by the predictor, a transmission timing of transmitting information from the at least two devices to the application so that the load is not larger than a predetermined value;
an application server including the application; and
the devices.

### ADVANTAGEOUS EFFECTS OF INVENTION

According to the present invention, it is possible to control an information transmission timing based on prediction of the load of a server so as to prevent the congestion of information transmission.

### BRIEF DESCRIPTION OF DRAWINGS

Fig. 1 is a functional block diagram showing the configuration of an information processing system according to the first example embodiment of the present invention;
Fig. 2 is a functional block diagram showing the configuration of an information processing system according to the second example embodiment of the present invention;
Fig. 3 is a protocol sequence chart for explaining the operation of the information processing system according to the second example embodiment of the present invention;
Fig. 4 is a block diagram for explaining the hardware arrangement of an application server according to the second example embodiment of the present invention;
Fig. 5 is a block diagram for explaining the hardware arrangement of an information processing apparatus according to the second example embodiment of the present invention;
Fig. 6 is a view for explaining a management table managed by the information processing apparatus according to the second example embodiment of the present invention;
Fig. 7 is a view for explaining initial information transmitted from the application server to the information processing apparatus in the information processing system according to the second example embodiment of the present invention;
Fig. 8 is a flowchart for explaining the operation of the information processing apparatus according to the second example embodiment of the present invention;
Fig. 9 is a functional block diagram showing the configuration of an information processing system according to the third example embodiment of the present invention;
Fig. 10 is a block diagram for explaining the hardware arrangement of an application server according to the third example embodiment of the present invention;
Fig. 11 is a block diagram for explaining the hardware arrangement of an information processing apparatus according to the third example embodiment of the present invention;
Fig. 12 is a flowchart for explaining the operation of the information processing apparatus according to the third example embodiment of the present invention; and
Fig. 13 is a functional block diagram showing the configuration of an information processing system according to the fourth example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

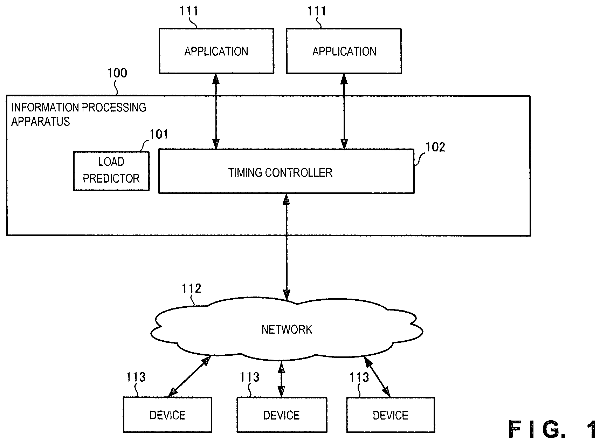

An information processing apparatus according to the first example embodiment of the present invention will be described with reference to Fig. 1.

As shown in Fig. 1, an information processing apparatus 100 includes a load predictor 101 and a timing controller 102. The information processing apparatus 100 is connected to an application 111 and is also connected to two or more devices 113 via a network 112.

By using a planned transmission/reception count derived based on an information collection request received from the application 111 and a predicted transmission/reception count predicted based on a history of information transmission from the two or more devices 113 to the application 111, the load predictor 101 predicts a load for transmitting information from the two or more devices 113 to the application 111.

Based on a prediction result obtained by the load predictor 101, the timing controller 102 controls a transmission timing of transmitting information from the two or more devices 113 to the application 111 so that the load is equal to or smaller than a predetermined value.

According to this example embodiment, when the application 111 collects information from the two or more devices 113, it is possible to control an information transmission timing based on prediction of the load of the information processing apparatus 100 so as to prevent the congestion of information transmission.

### [Second Example Embodiment]

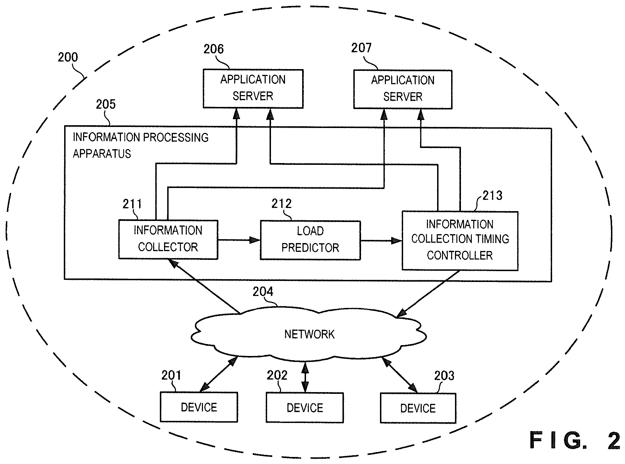

An information processing system according to the second example embodiment of the present invention will be described next with reference to Figs. 2 to 8.

### «Explanation of This Example Embodiment»

Fig. 2 is a functional block diagram for explaining the configuration of the information processing system according to this example embodiment.

As shown in Fig. 2, an information processing system 200 according to this example embodiment includes two or more devices 201 to 203, a network 204, an information processing apparatus 205, and two or more application servers 206 and 207. The devices 201 to 203 are connected to the information processing apparatus 205 via the network 204, and the application servers 206 and 207 are connected to the information processing apparatus 205. Furthermore, the information processing apparatus 205 includes an information collector 211, a load predictor 212, and an information collection timing controller 213. Note that in this example embodiment, the information processing apparatus 205 functions as a common service platform.

The information collector 211 collects data sensed by the devices 201 to 203 at a timing instructed by each of the application servers 206 and 207, and transmits the data to each of the application servers 206 and 207 as collected information.

At this time, the load predictor 212 predicts the load of the information processing apparatus 205 required for information transmission based on statistical past information or registration information for periodic information transmission of the collected information to each of the application servers 206 and 207. The registration information indicates an information collection timing and the like, and the statistical past information indicates a history of information collection timings, a history of information processes executed in the information processing apparatus 205, and the like. Furthermore, the load predictor 212 predicts variance of information collection time from the devices and information transmission time to the application servers based on information about information collection from the devices and information transmission to the application servers.

In consideration of the load prediction result and variance prediction obtained by the load predictor 212, the information collection timing controller 213 determines a timing that levels the predicted load of the information processing apparatus 205 to a predetermined value or less. Furthermore, the information collection timing controller 213 instructs the devices 201 to 203 and the application servers 206 and 207 of the timing. At this time, the information collection timing controller 213 desirably instructs the respective devices of different information collection timings.

The information processing apparatus 205 collects pieces of information requested by two or more different applications from the devices 201 to 203 based on requests from the application servers 206 and 207. The information processing apparatus 205 periodically collects sensor data from the devices 201 to 203 based on the requests from the application servers 206 and 207. Furthermore, the information processing apparatus 205 transmits, to the application servers 206 and 207, the pieces of information collected from the devices 201 to 203. The information processing apparatus 205 performs the following processing using the statistic past information or the registration information for periodic data transmission to the application servers 206 and 207. That is, based on the registration information or statistic past information, variance of data collection time and data transmission time is predicted, and data collection times from the devices are leveled based on the prediction.

The information processing apparatus 205 manages, per unit time for a predetermined period in the periodic processing, a planned transmission/reception count and information of nodes (devices and application servers) that desire information transmission/reception. Furthermore, the information processing apparatus 205 analyzes the information collection timings designated by the application servers 206 and 207 for the respective applications and the devices 201 to 203, and updates the planned transmission/reception count and desired node information per unit time.

With this processing, even if two or more different applications collect information at different intervals, the information processing apparatus 205 can predict variance of information collection time and information transmission time.

Furthermore, the information processing apparatus 205 can determine, for the application that desires periodic information transmission/reception at predetermined time, a new data collection timing that levels the predicted load of the self apparatus per unit time. Predetermined time is time when the total value of the predicted transmission/reception count obtained on the analogy of a past communication history other than periodic communication and the planned transmission/reception count obtained based on intervals designated by the application servers 206 and 207 in consideration of the predicted transmission/reception count concentrates or exceeds a predetermined threshold.

### <<Explanation of Operation of Information Processing Apparatus>>

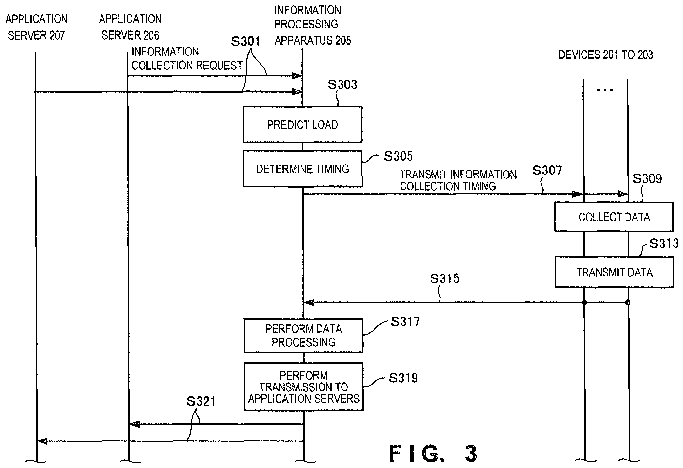

Fig. 3 is a protocol sequence chart for explaining the operation of the information processing system according to this example embodiment. As shown in Fig. 3, in step S301, upon receiving information collection requests from the application servers 206 and 207, the information processing apparatus 205 performs load prediction processing in step S303. Furthermore, in step S305, the information processing apparatus 205 determines an information collection timing from the devices 201 to 203 based on a prediction result. After that, in step S307, the information processing apparatus 205 transmits the determined information collection timing to the devices 201 to 203. In step S309, upon receiving the information collection timing, each of the devices 201 to 203 collects data in consideration of the timing. Data are collected at time designated by the data collection timing sent from the information processing apparatus 205. For example, data are collected at a timing such as "on the hour" or "every 15 min".

After that, in step S313, each of the devices 201 to 203 generates transmission information from the collected data. In step S315, after collecting data in accordance with the information collection timing received in step S307, each of the devices 201 to 203 transmits information to the information processing apparatus.

In step S317, upon receiving the pieces of information from the devices 201 to 203, the information processing apparatus 205 performs data processing. In step S319, the information processing apparatus 205 generates transmission information to be transmitted to the application servers 206 and 207. In step S321, the information processing apparatus 205 transmits the generated transmission information to the application servers 206 and 207.

### <<Explanation of Hardware of Application Server>>

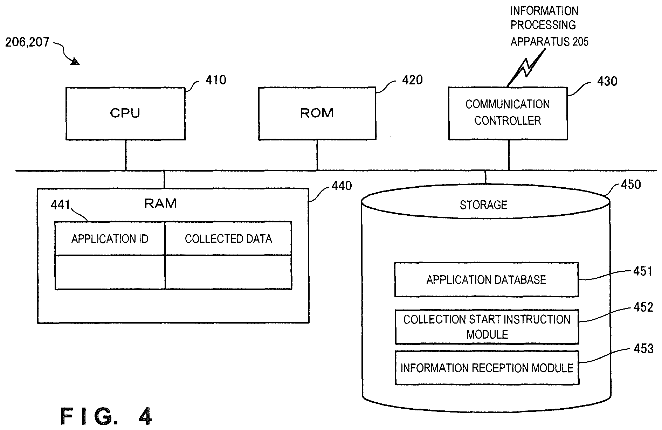

Fig. 4 is a block diagram for explaining the hardware arrangement of the application server according to this example embodiment. The application server 206 or 207 includes a CPU (Central Processing Unit) 410, a ROM (Read Only Memory) 420, a communication controller 430, a RAM (Random Access Memory) 440, and a storage 450.

The CPU 410 is a central processing unit, and controls the overall application server 206 or 207 by loading various programs from the ROM 420 or the storage 450 into the RAM 440 and executing them. The ROM 420 is a read only memory, and stores various parameters as well as a boot program to be executed first by the CPU 410. The RAM 440 is a random access memory, and stores execution programs and collected data for each application.

On the other hand, the storage 450 stores an application database 451, a collection start instruction module 452, and an information reception module 453. The application database 451 includes two or more application programs and data. The communication controller 430 controls communication with the information processing apparatus 205.

The collection start instruction module 452 is a program for instructing the information processing apparatus 205 to collect pieces of information from the devices 201 to 203.

The information reception module 453 is a program for receiving information transmitted from the information processing apparatus 205.

### <<Explanation of Hardware of Information Processing Apparatus>>

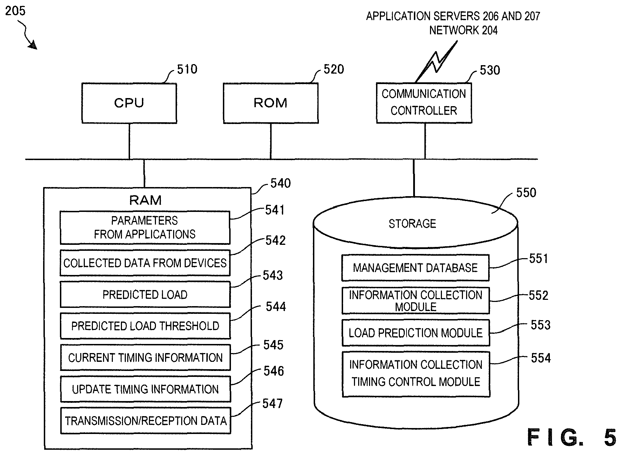

Fig. 5 is a block diagram for explaining the hardware arrangement of the information processing apparatus according to this example embodiment. The information processing apparatus 205 includes a CPU 510, a ROM 520, a communication controller 530, a RAM 540, and a storage 550. The CPU 510 is a central processing unit, and controls the information processing apparatus 205 by loading various programs from the ROM 520 or the storage 550 into the RAM 540 and executing them. The ROM 520 is a read only memory, and stores various parameters as well as a boot program to be executed first by the CPU 510. The RAM 540 is a random access memory, and stores execution programs, parameters 541 received from the application servers 206 and 207, collected data 542 from the devices 201 to 203, a predicted load 543, and a predicted load threshold 544. The RAM 540 also stores current timing information 545, update timing information 546, and transmission data 547.

On the other hand, the storage 550 stores a management database 551, an information collection module 552, a load prediction module 553, and an information collection timing control module 554.

The communication controller 530 controls communication with the devices 201 to 203 via the network 204, and communication with the application servers 206 and 207.

The information collection module 552 is a program for collecting pieces of information from the devices 201 to 203, and transmitting the collected pieces of information to the application servers 206 and 207.

The load prediction module 553 is a program for predicting the load of the information processing apparatus 205 per unit time.

The information collection timing control module 554 is a program for determining a new information collection timing that levels the predicted load per unit time to the predetermined value or less.

### <<Explanation of Management Database>>

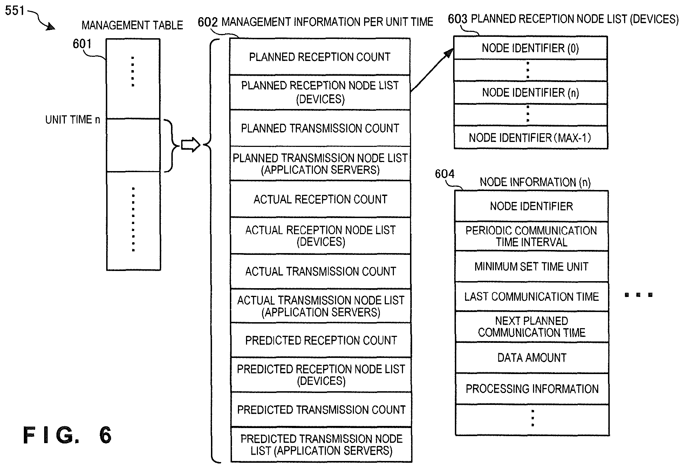

Fig. 6 is a view for explaining a management table managed by the information processing apparatus according to this example embodiment. The information collection timing controller 213 determines an information collection timing based on data stored in the management database 551. The management database 551 includes a management table 601, as shown in Fig. 6. The management table 601 includes management information 602 per unit time.

The management information 602 per unit time includes a planned reception count, a planned reception node list (devices), a planned transmission count, a planned transmission node list (application servers), an actual reception count, and an actual reception node list (devices). The management information 602 per unit time also includes an actual transmission count, an actual transmission node list (application servers), a predicted reception count, a predicted reception node list (devices), a predicted transmission count, and a predicted transmission node list (application servers).

For example, a planned reception node list (device) 603 is a table representing a list of the node identifiers of devices that plan to receive information. Node information 604 is saved for each node identifier. The node information 604 includes a node identifier, a periodic communication time interval, a minimum set time unit, last communication time, next planned communication time, a data amount, and processing information. The same node list tables are provided for the planned transmission node list, actual reception node list, actual transmission node list, predicted reception node list, and predicted transmission node list.

Fig. 6 shows the planned transmission/reception count, actual transmission/reception count, predicted transmission/reception count, and pieces of node information per unit time, that are managed by the information processing apparatus 205. In this structure, pieces of node information per unit time are indicated by the node identifier list, and then each piece of node information is obtained.

That is, the information processing apparatus 205 always updates the management information 602 per unit time. The unit time is, for example, 1 sec. The management information 602 per unit time includes, for example, (a) to (f) below.
(a) planned reception count and node list: the number of sensor devices that plan to receive sensor data at corresponding time and a corresponding node identifier list
(b) planned transmission count and node list: the number of application serves that plan to transmit sensor data at corresponding time and a corresponding node identifier list
(c) actual reception count and node list: the number of sensor devices that have received sensor data at corresponding time and a corresponding node identifier list
(d) actual transmission count and node list: the number of application serves that have transmitted sensor data at corresponding time and a corresponding node identifier list
(e) predicted reception count and node list: the number of sensor devices that have been predicted to receive sensor data at corresponding time and a corresponding node identifier list
(f) predicted transmission count and node list: the number of application servers that have been predicted to transmit sensor data at corresponding time and a corresponding node identifier list

Note that there is only past information for actual records, and it is thus necessary to perform prediction by analogy for a predetermined period in the future.

The node information 604 shown in Fig. 6 is information managed for each node identifier when each of the devices 201 to 203 or each of the application servers 206 and 207 is set as a node. Furthermore, the node information 604 indicates actual communication records and collection instruction information sent from each of the application servers 206 and 207 to the information processing apparatus 205 and information determined based on these pieces of information.

The minimum set time unit is, for example, a unit that is set when the information processing apparatus 205 levels communication times and used. That is, there may be a case in which when the information processing apparatus 205 levels communication times, even if communication time in seconds is designated, the target node can accept only time in minutes. In this case, designation of communication time in seconds is invalidated. Thus, if such information is grasped in advance, it is set and used.

The load on the information processing apparatus 205 in this example embodiment is given by the total value of the "planned" transmission/reception count per unit time based on the requests from the application servers 206 and 207 and the "predicted" transmission/reception count per unit time. The "planned" transmission/reception count per unit time is a transmission/reception count of periodic communication. The "predicted" transmission/reception counts per unit time is obtained on the analogy of a past communication history, and excludes actual value of periodic communication. In this example embodiment, the "planned" transmission/reception count is a leveling target.

Note that if a plurality of nodes desire information transmission/reception for the same unit time, a plurality of pieces of node information are indicated by a finite list of a plurality of node identifiers in the memory of the information processing apparatus 205 or an external storage device together with the planned transmission/reception count per unit time. After that, the node information for each node identifier in the list may be separately managed or the plurality of node identifiers or pieces of node information may be linked in a chain.

### <<Information Sent from Application Server to Information Processing Apparatus>>

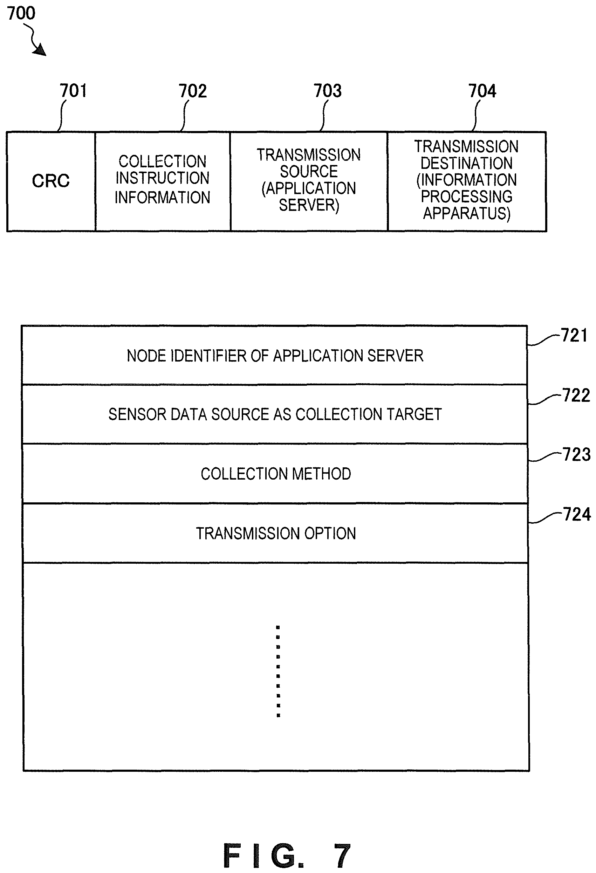

Fig. 7 is a view for explaining initial information transmitted from the application server 206 or 207 to the information processing apparatus 205 in the information processing system according to this example embodiment.

The application server 206 or 207 notifies in advance the information processing apparatus 205 of initial information 700 necessary for information collection. As shown in Fig. 7, the initial information 700 includes a CRC 701, collection instruction information 702, a transmission source (application server) 703, and a transmission destination (information processing apparatus) 704. Note that the collection instruction information 702 includes the parameters 541. The collection instruction information 702 includes (1) to (4) below.
(1) node identifier of application server 721
(2) sensor data source as collection target 722
(3) collection method 723
(4) transmission option 724

(1) to (3) described above are essential pieces of information and (2) to (4) may be set to fixed values under the contract.

The sensor data source 722 as a collection target in (2) above may be designated by the node identifier of a sensor device (a plurality of sensor data sources may be designated) or by a sensor type and an application range (location, time period, and the like). The contract may be fixed by the node identifier 721 of the application server in (1) above.

Examples of the collection method 723 in (3) above are schedule communication, periodic communication, communication by threshold determination of sensor data, and on-demand communication. For schedule communication, a communication time schedule, or a period, reference time, and a periodic time interval are designated. For periodic communication, a periodic time interval, or reference time and a periodic time interval are designated. For communication by threshold determination of sensor data, a threshold and a determination method (≥, ≤, <, =, or the like) are designated.

In the transmission option 724 in (4) above, availability of cache data transmission, transmission of only latest collection data, transmission of all data after last transmission, transmission of the average value of all data after last transmission, or the like is designated. In this designation operation, a plurality of options can be designated and a fixed value may be set under the contract. For transmission of all the data after last transmission, it is possible to designate compressed data transmission of all data after last transmission. Furthermore, transmission priority (schedule time priority, data priority, schedule time and data priority, or no designation) indicating whether transmission time or transmission data contents are prioritized or the like is designated.

### <<Explanation of Operation of Information Processing Apparatus>>

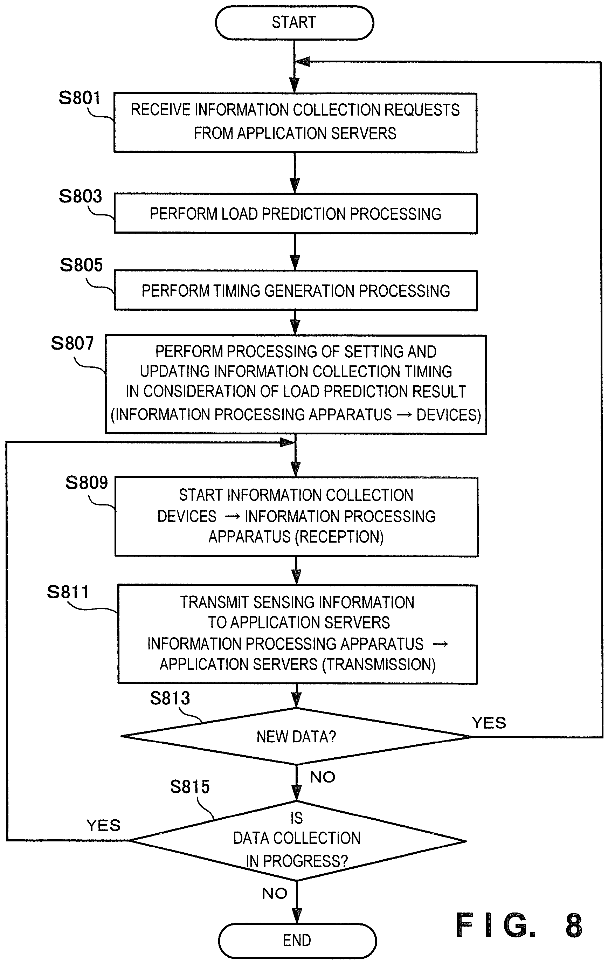

Fig. 8 is a flowchart for explaining the operation of the information processing apparatus 205 according to this example embodiment.

Upon receiving information collection requests from the application servers 206 and 207 in step S801, the information processing apparatus 205 performs load prediction processing in step S803. In step S805, the information processing apparatus 205 generates an information collection timing that levels the load to a predetermined threshold or less.

In step S807, the information processing apparatus 205 performs processing of determining and updating the information collection timing, and notifies the devices 201 to 203 of the determined or updated information collection timing. After that, in step S809, the information processing apparatus 205 performs information collection processing to collect, as information, data sensed by the devices 201 to 203. In step S811, the information processing apparatus 205 transmits, to the application servers 206 and 207, the information collected from the devices 201 to 203.

After that, in step S813, the information processing apparatus 205 determines whether new information collection requests have been received. If it is determined in step S813 that the new information collection requests have been received, the information processing apparatus 205 shifts to the processing in step S801; otherwise, the information processing apparatus 205 determines in step S815 whether information collection is in progress. If it is determined that information collection is in progress, the information processing apparatus 205 shifts to the processing in step S809 to continue the process. If information collection has ended, the process ends.

In a case in which planned communication time, reference time and a periodic time interval, or the like is confirmed, that is, communication time and the number of nodes are confirmed in advance, load transition is readily predicted. Note that load prediction is determined in accordance with the arrangement (distributed arrangement or the like), throughput, and service of the server, and a data amount.

In a case in which prediction is performed on the analogy of a past communication history, so-called pattern analysis is performed to predict load transition. For example, the load for a predetermined period is predicted by obtaining the relationship between the past communication history and information of, for example, a season, a day of the week, a time period, a holiday, an event, a weather forecast, and the like.

In this example, the load for a predetermined period is predicted by deriving a planned load in the former case in which the planned communication time and the number of nodes are confirmed, and considering an increase/decrease of the actual load with respect to the total load obtained by adding, to the derived load, a load predicted in the latter case in which prediction is performed on the analogy of the past communication history.

Note that the application servers 206 and 207 may preset a timing change allowable range in the information processing apparatus 205, and the information processing apparatus 205 may determine whether to permit a change of transmission time. Alternatively, based on a timing change allowable range preset in the application servers 206 and 207, the application servers 206 and 207 may determine whether an information transmission time change permission request received from the information processing apparatus 205 can be accepted. The application servers 206 and 207 may return, to the information processing apparatus 205, information indicating whether the information transmission time change permission request can be accepted.

If the information processing apparatus 205 determines that it is necessary to correct time based on prediction every time information is received from the devices 201 to 203, it may include an information collection timing change instruction in the information to be returned to the devices 201 to 203.

It may be configured to perform permission processing about a change of the information transmission timing from the information processing apparatus 205 to the application servers 206 and 207. In this case, if the information processing apparatus 205 determines that it is necessary to change the information transmission timing, the information transmission time change permission request to the application servers 206 and 207 may be included in transmission information to the application servers 206 and 207. The permission request is included in transmission information when the information processing apparatus 205 determines that it is necessary to change the information transmission timing at the time of transmitting, to the application servers 206 and 207, information before the information transmission timing is changed. If the information returned from the application servers 206 and 207 indicates permission of a change of the information transmission timing, information transmission is performed at the changed timing; otherwise, information transmission is continued at the timing before the change.

In the information processing apparatus 205, an information transmission timing change instruction to the devices 201 to 203 and the information transmission timing change permission request to the application servers 206 and 207 may be issued at the same time. Alternatively, for example, an instruction may be issued to the devices 201 to 203 after permission by the application servers 206 and 207 in order.

If information transmission timing change permission processing from the application servers 206 and 207 is not arranged, the information processing apparatus 205 changes the information transmission timing. At this time, the information processing apparatus 205 changes the information transmission timing with determination by the information processing apparatus 205 based on information of a changeable range preset in the information processing apparatus 205.

In the information processing apparatus 205, a method of determining the information collection timing and information transmission time may be performed based on the planned transmission/reception count per unit time and the actual transmission/reception count per unit time. The planned transmission/reception count per unit time is determined based on the registration information of the devices 201 to 203 and the application servers 206 and 207 in the information processing apparatus 205. The actual transmission/reception count per unit time is determined based on actual records of actually receiving or transmitting information. If the registration information is linked with the identifiers of the devices 201 to 203 and the application servers 206 and 207, and periodic information reception or information transmission is designated in advance, the periodic time, explicit time, and the like are set.

The planned transmission/reception count and actual transmission/reception count per unit time will be described by exemplifying a case in which the unit time is set to 1 min. In the planned transmission/reception count, a value obtained by counting, for a predetermined period of 1 min, the number of devices or application servers that are registered in the registration information and plan to receive or transmit information at the same time is set. In the actual transmission/reception count, a value obtained by counting, for a predetermined period of 1 min, the number of devices or application servers that have actually performed communication at the same time is set. The planned transmission/reception count and actual transmission/reception count may be always managed and updated in the database of the information processing apparatus 205.

According to this example embodiment, it is possible to avoid the concentration of information transmission from the devices 201 to 203 to the application servers 206 and 207, thereby avoiding congestion at the time of information collection in the information processing apparatus 205. This levels the predicted load of the information processing apparatus 205 to a predetermined value or less, thereby avoiding an increase in load.

Note that the two application servers 206 and 207 are shown in this example embodiment. However, one application server may be provided or three or more application servers whose purposes and services are completely different may be connected to the information processing apparatus 205. In this example embodiment, the three devices 201 to 203 have been explained. However, the number of devices is arbitrary, and two or four or more devices may be provided. These devices may be devices whose purposes and features are completely different. Note that even if the number of applications is one, if a plurality of devices exist, congestion may occur in a general information processing apparatus. However, in the information processing apparatus 205 according to this example embodiment, it is possible to avoid congestion at the time of information collection in this case.

If the number of applications is one, it is possible to control an information collection timing on the application server side so as to avoid congestion in the information processing apparatus 205. However, if a plurality of applications collect information at different intervals, it is difficult to operate all of a plurality of application servers to avoid congestion in the information processing apparatus. According to this example embodiment, however, even if a plurality of applications collect information at different intervals, it is possible to avoid congestion at the time of information collection in the information processing apparatus 205. This levels the predicted load of the information processing apparatus 205 to the predetermined value or less, thereby avoiding an increase in load.

A communication application operating on each of the devices 201 to 203 may be able to change the data transmission timing in accordance with an instruction from the information processing apparatus 205 or the application server 206 or 207. Examples of information that can be instructed to the communication application operating on each of the devices 201 to 203 are periodic time of acquisition of sensing data, periodic time of transmission of acquired sensing data, a reference value when performing transmission at the time of detection of an abnormal value.

Each acquired sensing data is a set of sensing time and a data value, and the sensing data for a plurality of times may be transmitted at once.

The information processing apparatus 205 may obtain in advance, from the application servers 206 and 207, permission to level the data transmission time to the application servers 206 and 207.

### [Third Example Embodiment]

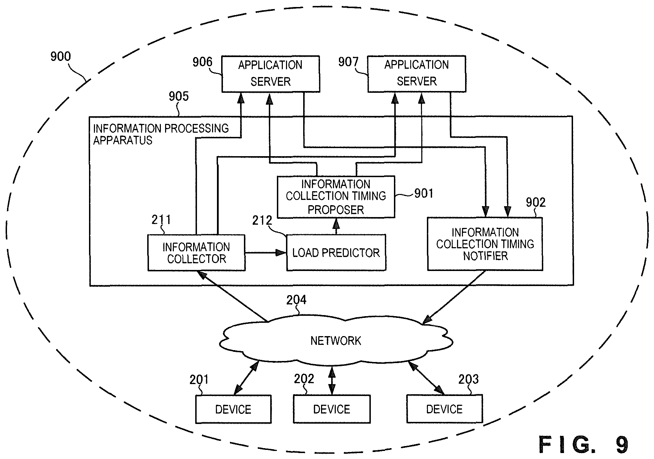

An information processing system according to the third example embodiment of the present invention will be described with reference to Fig. 9. Fig. 9 is a functional block diagram for explaining the configuration of an information processing system 900 according to this example embodiment. The information processing system 900 according to this example embodiment is different from that according to the second example embodiment in that an information processing apparatus 905 includes an information collection timing proposer 901 and an information collection timing notifier 902. The remaining components and operations are the same as those in the second example embodiment. Hence, the same reference numerals denote the same components and operations, and a detailed description thereof will be omitted.

This example embodiment adopts an arrangement in which the information processing apparatus 905 does not determine an information collection timing. Instead, this example embodiment adopts an arrangement in which the information processing apparatus 905 proposes, for application servers 906 and 907, information collection during a time period when the load of the self apparatus is small.

Referring to Fig. 9, the information processing system 900 according to this example embodiment includes devices 201 to 203, a network 204, the information processing apparatus 905, and the application servers 906 and 907. The information processing apparatus 905 includes an information collector 211, a load predictor 212, the information collection timing proposer 901, and the information collection timing notifier 902.

### <<Explanation of Hardware of Application Server>>

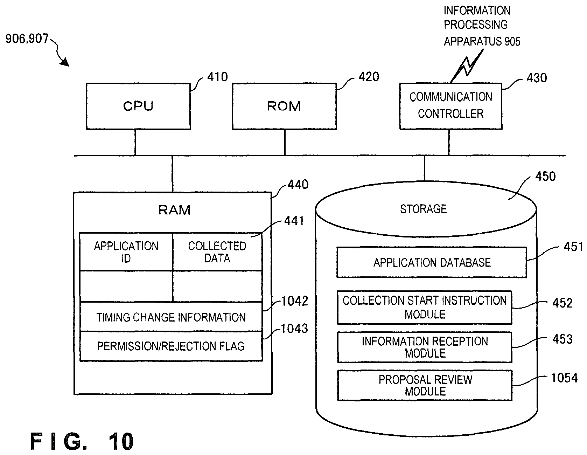

Fig. 10 is a block diagram for explaining the hardware arrangement of the application server 906 or 907 according to this example embodiment. The application server 906 or 907 includes a CPU 410, a ROM 420, a communication controller 430, a RAM 440, and a storage 450.

The RAM 440 is a random access memory, and stores collected data for each application, timing change information 1042, and a permission/rejection flag 1043.

On the other hand, the storage 450 stores an application database 451, a collection start instruction module 452, an information reception module 453, and a proposal review module 1054.

The proposal review module 1054 is a program for reviewing whether to permit an information collection timing change received from the information processing apparatus 905, and transmitting a review result to the information processing apparatus 905.

### <<Explanation of Hardware of Information Processing Apparatus>>

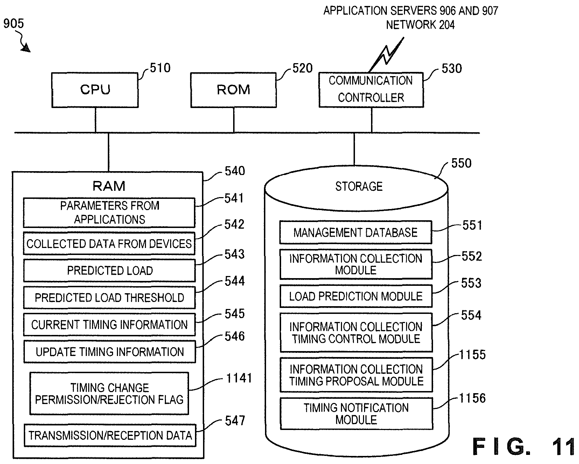

Fig. 11 is a block diagram for explaining the hardware arrangement of the information processing apparatus 905 according to this example embodiment. The information processing apparatus 905 includes a CPU 510, a ROM 520, a communication controller 530, a RAM 540, and a storage 550.

The RAM 540 is a random access memory, and stores parameters 541 received from the application servers 906 and 907, collected data 542 from the devices 201 to 203, a predicted load 543, and a predicted load threshold 544. The RAM 540 also stores current timing information 545, update timing information 546, transmission data 547, and a timing change permission/rejection flag 1141.

On the other hand, the storage 550 stores a management database 551, an information collection module 552, a load prediction module 553, an information collection timing control module 554, an information collection timing proposal module 1155, and a timing notification module 1156.

The information collection timing proposal module 1155 proposes a change of the information collection timing for the application server 906.

The timing notification module 1156 notifies the devices 201 to 203 of the change of the information collection timing.

### <<Explanation of Operation of Information Processing Apparatus>>

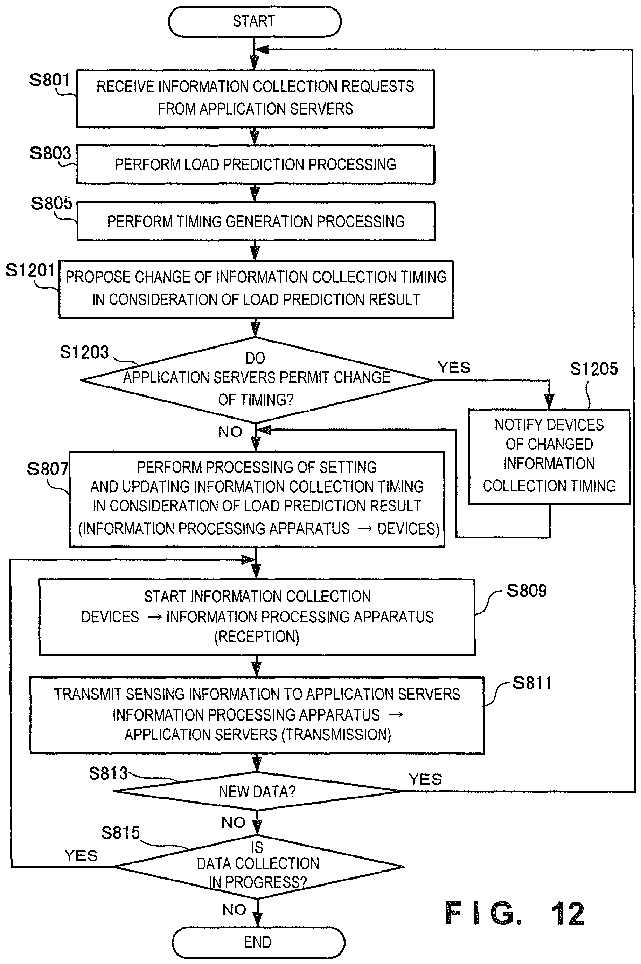

Fig. 12 is a flowchart for explaining the operation of the information processing apparatus 905 according to this example embodiment. Only processes added to the processing described with reference to Fig. 8 will be explained below.

After processing in step S805, in step S1201, the information collection timing proposer 901 calculates, in consideration of load transition predicted by the load predictor 212, an information collection timing that levels the predicted load of the information processing apparatus 905 in the future to a predetermined value or less. Then, the information collection timing proposer 901 notifies the application servers 906 and 907 of a proposal of a change of the information collection timing.

In step S1203, the information collection timing proposer 901 determines whether the application servers 906 and 907 permit a change to the calculated information collection timing.

If it is determined in step S1203 that a change is not permitted, the information processing apparatus 905 shifts to processing in step S807.

If it is determined in step S1203 that a change is permitted, the information collection timing notifier 902 of the information processing apparatus 905 updates, in step S1205, the information to notify the devices 201 to 203 that information is collected at the timing. After that, the information processing apparatus 905 shifts to the processing in step S807.

Note that the information collection timing proposer 901 may transmit, to the application servers 906 and 907, information about charging in addition to the information collection timing. As an example, an operation is performed in which the information processing apparatus 905 proposes, for the application servers 906 and 907 that collect information at an interval of 10 min, information collection at an interval of 30 min that is predicted to relatively reduce the load instead of suppressing a charged fee. In this case, the application servers 906 and 907 determine whether to permit the proposal in consideration of the required charged fee and application quality.

According to this example embodiment, when the application servers 906 and 907 permit the proposal of a change, the transmission timing is changed. Thus, it is possible to change the transmission timing in consideration of the convenience of the application servers 906 and 907. It is therefore possible to reduce the concentration of the information transmission timings from the devices 201 to 203 to the application servers 906 and 907, thereby reducing congestion at the time of information collection in the information processing apparatus 905. This levels the predicted load of the information processing apparatus 905 to the predetermined value or less, thereby avoiding an increase in load.

### [Fourth Example Embodiment]

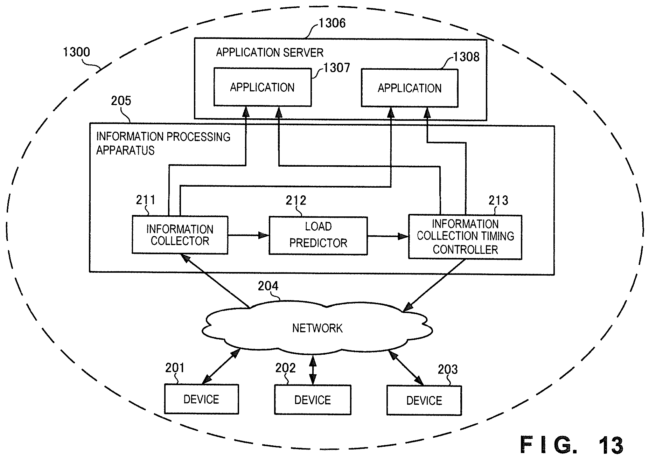

An information processing system according to the fourth example embodiment of the present invention will be described next with reference to Fig. 13. Fig. 13 is a functional block diagram for explaining the configuration of an information processing system 1300 according to this example embodiment. The information processing system 1300 according to this example embodiment is different from that according to the second example embodiment in that one application server 1306 includes two or more applications 1307 and 1308. The remaining components and operations are the same as those in the second example embodiment. Hence, the same reference numerals denote the same components and operations, and a detailed description thereof will be omitted.

In this example embodiment, each of the applications 1307 and 1308 individually issues an information collection request to an information processing apparatus 205. Even in this case, the same effect as that of the second example embodiment can be obtained.

### [Other Example Embodiments]

Note that the present invention is not limited to the above-described example embodiments and changes can be made appropriately without departing from the scope of the present invention. For example, the information processing apparatus 205 or 905 is, for example, an M2M platform, and may be an M2M Service Infrastructure defined by oneM2M that standardizes Machine-to-Machine services. The M2M service Infrastructure corresponds to an IN (Infrastructure Node) in an oneM2M architecture, and includes a CSE (Common Services Entity) that provides CSFs (Common Services Functions) defined by oneM2M. The information processing apparatus 205 or 905 may be an apparatus including a plurality of CSEs. The CSE of the IN is also called an IN (infrastructure Node)-CSE. The network is, for example, a mobile communication network provided by a communication carrier, and may be an Underlying Network defined by oneM2M.

As an apparatus arranged between the information processing apparatus 205 or 905 and the devices 201 to 203, a gateway apparatus may be used. The gateway apparatus is, for example, a mobile router, and may be an M2M Gateway defined by oneM2M. The M2M Gateway corresponds to an MN (Middle Node) in the oneM2M architecture, and includes a CSE. Note that the CSE in the MN is also called an MN-CSE. Furthermore, the devices 201 to 203 are, for example, sensor devices, and may be M2M Devices defined by oneM2M. Each M2M Device corresponds to an ASN (Application Service Node) or ADN (Application Dedicated Node) in the oneM2M architecture, and the ASN includes a CSE. Note that the CSE in the ASN is called an ASN-CSE.

The application server 206, 207, 906, or 907 is, for example, a server that processes a specific operation, and may be an M2M Application Infrastructure defined by oneM2M. The application server 206, 207, 906, or 907 may include an AE (Application Entity) in the oneM2M architecture. Note that an AE existing in an Infrastructure Domain defined by oneM2M and connected to the IN-CSE is also called an IN (Infrastructure Node)-AE.

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

### [Other Expressions of Example Embodiments]

Some or all of the above-described example embodiments can also be described as in the following supplementary notes but are not limited to the followings.

### (Supplementary Note 1)

There is provided an information processing apparatus comprising:
a predictor that predicts, using a planned transmission/reception count derived based on an information collection request received from an application and a predicted transmission/reception count predicted based on a history of information transmission from at least two devices to the application, a load for transmitting information from the at least two devices to the application; and
a controller that controls, based on a prediction result obtained by the predictor, a transmission timing of transmitting information from the at least two devices to the application so that the load is not larger than a predetermined value.

### (Supplementary Note 2)

There is provided the information processing apparatus according to supplementary note 1, wherein the controller controls the transmission timing so that the planned transmission/reception count per unit time is not larger than a predetermined number.

### (Supplementary Note 3)

There is provided the information processing apparatus according to supplementary note 1 or 2, wherein the controller controls the transmission timing within a change allowable range of the transmission timing of information designated by the application.

### (Supplementary Note 4)

There is provided the information processing apparatus according to any one of supplementary notes 1 to 3, wherein the controller instructs the devices to change the transmission timing at which the devices transmit the information.

### (Supplementary Note 5)

There is provided the information processing apparatus according to any one of supplementary notes 1 to 4, further comprising:
a proposer that proposes a change of the transmission timing for the application,
wherein the controller controls the transmission timing when the application permits the proposal of the change.

### (Supplementary Note 6)

There is provided the information processing apparatus according to supplementary note 5, wherein when requesting the application to permit a change of an information collection timing, the proposer proposes reduction of a consideration paid for the application.

### (Supplementary Note 7)

There is provided the information processing apparatus according to any one of supplementary notes 1 to 6, wherein
the predictor further predicts variance of information collection time from the devices and information transmission time to the application server based on information about information collection from the devices and information transmission to the application server, and
the controller controls the transmission timing so as to level the load based on the prediction of the load and the variance.

### (Supplementary Note 8)

There is provided the information processing apparatus according to any one of supplementary notes 1 to 7, wherein the predictor predicts the load in consideration of an arrangement, throughput, and service of the information processing apparatus, and a data amount.

### (Supplementary Note 9)

There is provided the information processing apparatus according to any one of supplementary notes 1 to 8, wherein the predictor predicts the load in consideration of information of a season, a day of the week, a time period, a holiday, an event, and a weather forecast as the history of information transmission.

### (Supplementary Note 10)

There is provided the information processing apparatus according to any one of supplementary notes 1 to 9, wherein the predictor predicts the load in consideration of an increase/decrease of an actual load with respect to the predicted load.

### (Supplementary Note 11)

There is provided an information processing method comprising:
predicting, using a planned transmission/reception count derived based on an information collection request received from an application and a predicted transmission/reception count predicted based on a history of information transmission from at least two devices to the application, a load for transmitting information from the at least two devices to the application; and
controlling, based on a prediction result obtained in the predicting, a transmission timing of transmitting information from the at least two devices to the application so that the load is not larger than a predetermined value.

### (Supplementary Note 12)

There is provided an information processing program for causing a computer to execute a method, comprising:
predicting, using a planned transmission/reception count derived based on an information collection request received from an application and a predicted transmission/reception count predicted based on a history of information transmission from at least two devices to the application, a load for transmitting information from the at least two devices to the application; and
controlling, based on a prediction result obtained in the predicting, a transmission timing of transmitting information from the at least two devices to the application so that the load is not larger than a predetermined value.

### (Supplementary Note 13)

There is provided an information processing system comprising:
an information processing apparatus including
a predictor that predicts, using a planned transmission/reception count derived based on an information collection request received from an application and a predicted transmission/reception count predicted based on a history of information transmission from at least two devices to the application, a load for transmitting information from the at least two devices to the application, and
a controller that controls, based on a prediction result obtained by the predictor, a transmission timing of transmitting information from the at least two devices to the application so that the load is not larger than a predetermined value;
an application server including the application; and
the devices.

## Claims

1. An information processing apparatus comprising:
a predictor that predicts, using a planned transmission/reception count derived based on an information collection request received from an application and a predicted transmission/reception count predicted based on a history of information transmission from at least two devices to the application, a load for transmitting information from the at least two devices to the application; and
a controller that controls, based on a prediction result obtained by said predictor, a transmission timing of transmitting information from the at least two devices to the application so that the load is not larger than a predetermined value.

2. The information processing apparatus according to claim 1, wherein said controller controls the transmission timing so that the planned transmission/reception count per unit time is not larger than a predetermined number.

3. The information processing apparatus according to claim 1 or 2, wherein said controller controls the transmission timing within a change allowable range of the transmission timing of information designated by the application.

4. The information processing apparatus according to any one of claims 1 to 3, wherein said controller instructs the devices to change the transmission timing at which the devices transmit the information.

5. The information processing apparatus according to any one of claims 1 to 4, further comprising:
a proposer that proposes a change of the transmission timing for the application,
wherein said controller controls the transmission timing when the application permits the proposal of the change.

6. The information processing apparatus according to any one of claims 1 to 5, wherein
said predictor further predicts variance of information collection time from the devices and information transmission time to the application server based on information about information collection from the devices and information transmission to the application server, and
said controller controls the transmission timing so as to level the load based on the prediction of the load and the variance.

7. The information processing apparatus according to any one of claims 1 to 6, wherein said predictor predicts the load in consideration of an increase/decrease of an actual load with respect to the predicted load.

8. An information processing method comprising:
predicting, using a planned transmission/reception count derived based on an information collection request received from an application and a predicted transmission/reception count predicted based on a history of information transmission from at least two devices to the application, a load for transmitting information from the at least two devices to the application; and
controlling, based on a prediction result obtained in the predicting, a transmission timing of transmitting information from the at least two devices to the application so that the load is not larger than a predetermined value.

9. An information processing program for causing a computer to execute a method, comprising:
predicting, using a planned transmission/reception count derived based on an information collection request received from an application and a predicted transmission/reception count predicted based on a history of information transmission from at least two devices to the application, a load for transmitting information from the at least two devices to the application; and
controlling, based on a prediction result obtained in the predicting, a transmission timing of transmitting information from the at least two devices to the application so that the load is not larger than a predetermined value.

10. An information processing system comprising:
an information processing apparatus including
a predictor that predicts, using a planned transmission/reception count derived based on an information collection request received from an application and a predicted transmission/reception count predicted based on a history of information transmission from at least two devices to the application, a load for transmitting information from the at least two devices to the application, and
a controller that controls, based on a prediction result obtained by said predictor, a transmission timing of transmitting information from the at least two devices to the application so that the load is not larger than a predetermined value;
an application server including the application; and
the devices.
